# FASCICULE DE BREVET EUROPEEN

(11) **EP 2 598 274 B1**
(45) Date de publication et mention de la délivrance du brevet: **21.06.2017**
(21) Numéro de dépôt: 11752271.4
(22) Date de dépôt: 21.07.2011
(51) Int. Cl.: B23K 1/002

(54) **PROCÉDÉ DE BRASAGE PAR INDUCTION DE PIECES DE FORME COMPLEXE, ET POSTE DE BRASSAGE SIMPLE ET MULTIPLE DE MISE EN OEUVRE**
VERFAHREN ZUM INDUKTIVEN LÖTEN VON WERKSTÜCKEN MIT KOMPLEXER FORM, SOWIE EINZEL- ODER MEHRSTATIONEN-LÖTEINRICHTUNG
INDUCTION BRAZING PROCESS FOR COMPLEX SHAPE WORKPIECES, AND SINGLE-STATION, OR MULTI-STATION, BRAZING UNIT

(30) Priorité: 29.07.2010 FR 1056270
(43) Date de publication de la demande: 05.06.2013
(73) Titulaire: Safran Helicopter Engines, 64510 Bordes (FR)
(72) Inventeur: MARTIN, Amanda, F-64340 Boucau (FR)
(74) Mandataire: Gevers & Orès
(86) Numéro de dépôt international: PCT/FR2011/051768
(87) Numéro de publication internationale: WO 2012/022879

(56) Documents cités:
- US-A1- 2001 004 983

## Description

### INTRODUCTION

L'invention concerne un procédé de brasage par induction de pièces présentant une forme complexe, ainsi qu'un poste de brasage apte à mettre en oeuvre ce procédé, tels que décrits dans le document US-A-2001/0004983. Ce poste de brasage peut être multiple pour pouvoir effectuer plusieurs brasages simultanément.

Le domaine de l'invention est le brasage par induction pour l'assemblage de pièces et l'invention s'applique à tout profil de pièces à assembler, en particulier aux pièces de forme complexe, présentant par exemple des courbures. Les matériaux doivent être brasables, en particulier au regard de leurs points de fusion et de celui de la brasure, avec une conductivité électrique et une perméabilité magnétique suffisantes pour que le brasage puisse opérer.

L'induction électromagnétique comme mode de chauffage est avantageux : classiquement réalisé par un générateur couplé à un inducteur, il permet une montée en température rapide, un chauffage relativement localisé et reproductible, avec un faible coût d'exploitation. Ce type de chauffage s'applique dans de nombreux cas : recuit (tubes, fils), soudage (tubes), trempe superficielle et revenu (engrenages), redressage (arbres), etc.

Le brasage consiste en principe à assembler deux pièces métalliques par un joint métallique - la brasure - de point de fusion inférieur à celui des pièces, et nécessite pour ce faire la mise en oeuvre de conditions strictes, quel que soit son mode de chauffage:
un assemblage des pièces selon un plan de joint plan sur plan avec des jeux fixes entre les pièces,
des surfaces de pièces exemptes de graisses et d'oxydes ;
un cycle thermique fixe, uniquement assujetti à la géométrie des pièces et au couple de matériaux pièces/ brasure.

Un tel cycle thermique se compose classiquement d'une montée en température jusqu'à la température de palier (légèrement supérieure à la température de fusion de la brasure), d'un maintien en température pendant une durée déterminée puis d'un refroidissement de durée déterminée. Afin d'empêcher l'oxydation pendant la chauffe, deux approches sont connues suivant la force du brasage souhaité : en cas de brasage dit « fort »,un « flux » dit décapant protège le joint brasé de l'oxydation pendant le cycle thermique ; en cas de brasage dit « par diffusion » l'atmosphère est généralement contrôlée sous gaz neutre, par exemple sous argon.

L'induction comme mode de chauffage du brasage est connue pour des applications de type isotrope du fait de la géométrie de l'inducteur, à savoir pour des assemblages de pièces de révolution (tubulures, raccords, vannes, etc.) ou des assemblages de pièces de surfaces de géométrique simple et régulière, et sous atmosphère contrôlée.

Le brasage par induction comporte en général un inducteur en forme de solénoïde entourant les pièces à braser. L'inducteur est couplé à un pyromètre optique pour une régulation de température en fonction du point de fusion du flux de brasure.

Une telle approche ne permet pas d'élargir la gamme d'applications du brasage par induction à des assemblages de pièces de forme complexe, en particulier de pièces à profil complexe, ne présentant pas d'axe de révolution ou de symétrie mais un plan de joint « évolutif », c'est-à-dire non plan.

### EXPOSE DE L'INVENTION

L'invention vise précisément à réaliser un brasage de pièces à profil complexe, avec des jeux entre les pièces pouvant varier et des cycles de chauffe pouvant être extrêmement courts, donc en utilisant un chauffage du type à induction, tout en permettant de définir des conditions de mise en oeuvre reproductibles en production.

Pour atteindre ces objectifs, l'invention prévoit notamment d'adapter le cycle thermique au cours du brasage par une régulation et une vérification de l'homogénéisation en température par une cartographie thermique, en tenant compte du coefficient d'émissivité du matériau à braser.

A ce titre, la présente invention a pour objet un procédé de brasage par induction de pièces pouvant présenter une forme complexe, selon la revendication 1, et un poste de brasage de mise en oeuvre du procédé selon l'invention, défini par la revendication 6. Ce procédé consiste à définir un cycle thermique de chauffe comportant des phases de montée en température, de palier et de refroidissement en fonction du matériau à braser, à déposer un cordon de brasure sur un plan de joint entre les pièces à braser, à exercer une pression sensiblement uniforme sur les pièces à braser une fois réunies, à disposer d'une cartographie thermique du matériau à braser tenant compte des variations du coefficient d'émissivité de ce matériau pendant le cycle pour un contrôle d'homogénéisation de la chauffe. Ce cycle thermique est alors régulé par une boucle d'asservissement fermée à partir d'une visée en un point représentatif de chauffe tenant compte également des variations du coefficient d'émissivité du matériau en ce point et par une chauffe localisée par une induction de forme au plus près du plan de joint des pièces à braser sur lequel le cordon de brasure a été déposé.

Dans ces conditions, le procédé de l'invention permet d'élaborer les phases de mise au point d'applications industrielles, grâce à la reproductibilité des cycles thermiques. Le poste de brasage qui était un poste « goulot » en termes de durée et de coût en production devient un poste « fluide ». De plus, le taux de non qualité (en abrégé TNQ) du brasage est abaissé de 30-40% à moins de 3%, les coûts résiduels de NQ devenant négligeables. En outre, les risques électrique, thermique et magnétique sont sécurisés.

Selon des modes de mise en oeuvre particuliers :
- la prise en compte du coefficient d'émissivité du matériau à braser avec la température est effectuée par étalonnage de la variation du coefficient d'émissivité en fonction de la température de ce matériau par rapport à un corps noir à partir des flux de rayonnements respectifs obtenus aux mêmes températures ;
- l'induction de chauffe est localisée à proximité de zones de brasure à réaliser qui s'étendent selon le plan de joint ;
- le point représentatif de chauffe est sélectionné à proximité du plan de joint ;
- le brasage est défini par des paramètres figés de géométrie et de positionnement relatif des pièces à braser et de l'induction de forme, ainsi que de l'état de surface des pièces à braser.

Avantageusement, un tel procédé permet de réduire sensiblement la quantité de brasure en améliorant la qualité de l'opération. L'invention se rapporte également à un poste de brasage pour la mise en oeuvre du procédé ci-dessus. Un tel poste comporte un générateur de puissance électrique, apte à délivrer une tension déterminée à un transformateur sur lequel est branché un circuit conducteur formant un inducteur de forme. Ce circuit possède une conformation globale adaptée pour se rapporter à celle des zones de brasure, *la* pièce à braser *est* disposée sur un support de pièce de l'outillage. Des moyens de pression sont aptes à exercer une contrainte déterminée et sensiblement constante sur les pièces à braser. La température des pièces au cours du brasage est mesurée par un pyromètre infrarouge à visée laser et un régulateur est apte à délivrer une consigne de régulation de puissance au générateur en fonction de la température mesurée. Avantageusement, le poste est portatif et donc aisément transportable pour opérer sur site, en particulier lorsque le brasage ne nécessite pas la présence d'un gaz neutre. Le pyromètre est à visée laser afin de s'affranchir de toute perturbation de la régulation liée à la chauffe de matériaux proches.

Selon des modes particuliers de réalisation :
- la cartographie thermique est mesurée par une caméra infrarouge en phase de mise au point des paramètres de brasage, avant lancement de la fabrication série, pour figer ces paramètres ;
- l'inducteur est constitué d'une structure métallique à section rectangulaire, de préférence carrée de côté inférieure à 1 cm, formée de tronçons linéaires raccordés par soudage, épousant globalement la forme du plan de joint des pièces à braser ;
- des concentreurs de champ sont disposés au niveau des raccordements angulaires de l'inducteur afin d'éliminer les zones de fuite;
- l'inducteur est positionné à une distance du couvercle à braser qui n'excède pas 2 mm ;
- les moyens de pression sont composés d'un embout de serrage pourvu de doigts isolants munis de ressorts qui viennent en pression contre une face de l'une des pièces à braser, de sorte à exercer une contrainte déterminée et sensiblement constante sur l'ensemble des deux pièces ;
- des buses d'air comprimé sont avantageusement disposées à proximité des pièces à braser afin d'accélérer le refroidissement pour réduire les temps de cycle, dès que la valeur de la température affranchi l'assemblage de tout risque de trempe des matériaux.

Un poste de brasage multiple comporte avantageusement plusieurs inducteurs définis ci-dessus, de sorte à braser simultanément plusieurs joints d'une même pièce. Avantageusement, un générateur, un transformateur et un régulateur peuvent être mis en commun.

L'invention s'applique en particulier au brasage de couvercles de pales d'aubages de turbine, également dénommés distributeurs.

### BREVE DESCRIPTION DES FIGURES

D'autres caractéristiques et avantages de l'invention ressortiront à la lecture de la description qui suit et qui se rapporte à un exemple de réalisation, en référence aux figures annexées qui illustrent :
- la figure 1, une vue schématique d'un exemple d'installation de poste de brasage selon l'invention ;
- la figure 2, une vue perspective d'une pale de distributeur et du couvercle à braser, positionnés sur un support approprié ;
- la figure 3, une vue de dessus des pièces à braser selon la figure 2 avec un inducteur de forme selon l'invention ;
- la figure 4, une vue schématique en perspective de l'outillage de maintien et de serrage pendant le brasage, et
- la figure 5, un bloc diagramme de mise en oeuvre du procédé de brasage de l'invention.

### DESCRIPTION DETAILLEE D'UN EXEMPLE DE REALISATION

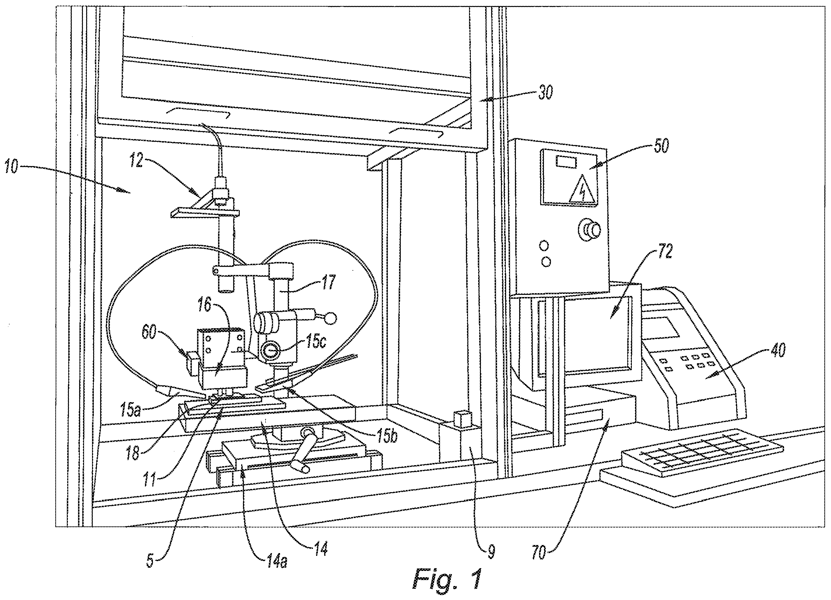

En référence à la figure 1, une installation selon l'invention comporte des équipements de chauffe disposés dans une enceinte 10 sous atmosphère libre, munie d'une porte 30 d'accès pouvant être bloquée par un verrou 9 pour des raisons de sécurité, ainsi que des équipements d'alimentation électriques hors de l'enceinte : un générateur de puissance 40 à haute fréquence pour favoriser les courants surfaciques, couplé à un régulateur de puissance 50 en amont et à un transformateur 60 en aval, ce dernier pouvant être intégré dans l'enceinte 10 - sous forme de tête de transformateur - à proximité des équipements de chauffe comme dans l'exemple illustré. Le régulateur 50 contrôle la régulation et suit l'évolution des brasages en cours. Une unité de traitement de données 70, muni d'un terminal de visualisation 72, permet d'enregistrer des données de cycles de chauffe et des coefficients d'émissivité des principaux matériaux de brasure en fonction de la température.

Les équipements de chauffe se composent d'un inducteur 11 monté aux bornes du transformateur 60 et d'un pyromètre infrarouge bichromatique à visée laser 12 couplé au régulateur 50. L'inducteur 11 est disposé en regard d'une table 14 - muni d'un bâti 14a de déplacement 2 axes. Les pièces à braser sont déposées dans un support 5 en matériau isolant réfractaire posé sur la table 14. Des buses d'air comprimé 15a et 15b sont avantageusement disposées entre l'inducteur 11 et la table 14. Ces buses sont reliées à un compresseur 15c piloté par le régulateur 50.

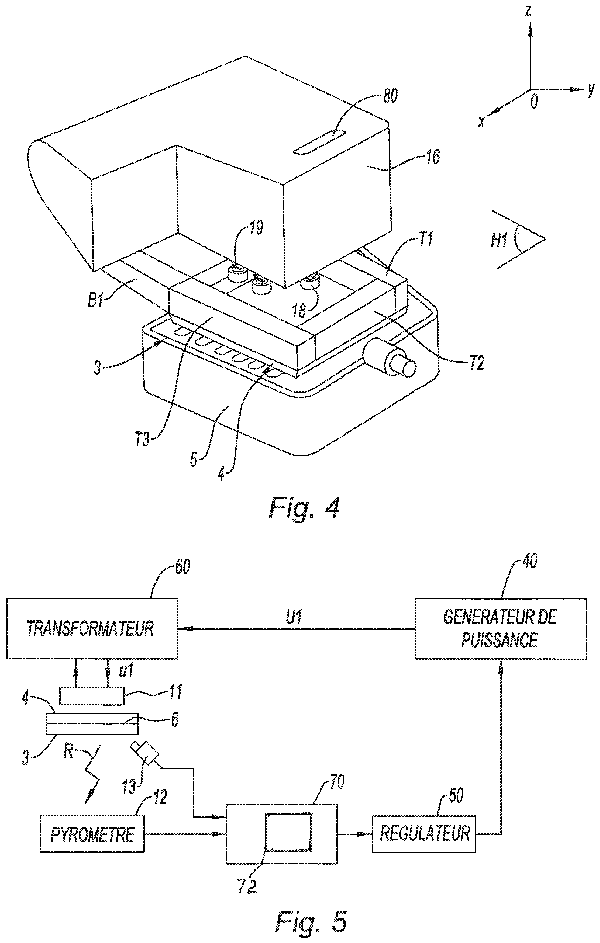

Les équipements de pression comprennent un embout 16 qui, monté verticalement sur ressort (voir figure 4) passe à travers l'inducteur 11 et surplombe le support 5. Cet embout est muni de six doigts de contact 18, en matériau thermiquement isolants, montés sur ressorts de hauteur réglable afin de permettre à l'ensemble des doigts d'exercer une contrainte sensiblement uniforme sur la pièce à braser.

L'exemple ci-après se rapporte au brasage d'un couvercle de pale de distributeur de turbine à gaz. Un distributeur de turbine est constitué de pales formant un aubage fixe et de deux anneaux, les pales étant pourvues de pieds montés sur l'anneau intérieur. La fonction du distributeur est de dévier l'écoulement d'air reçu en bord d'attaque entre les faces des pales afin d'orienter le flux d'air de l'aubage mobile en rotation.

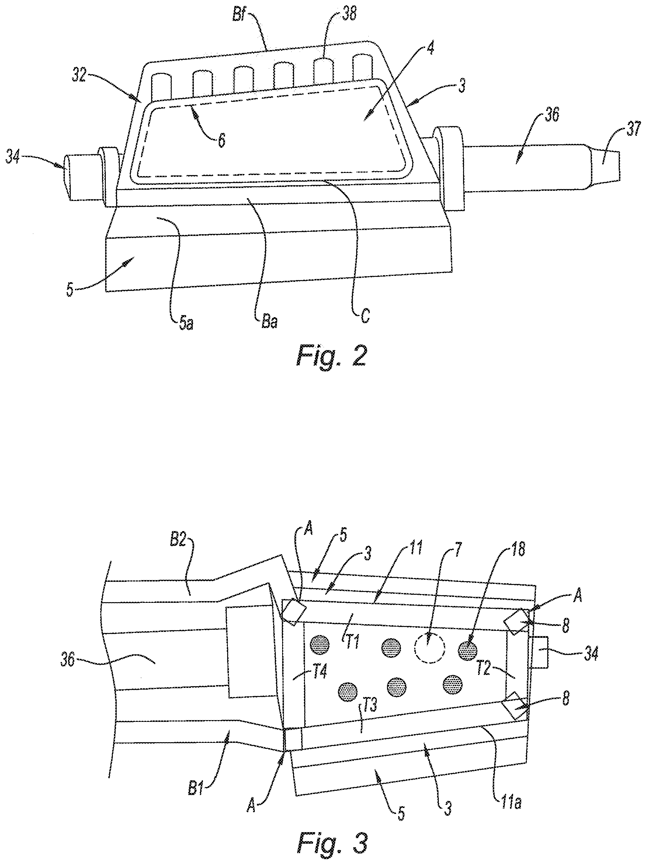

La vue en perspective de la figure 2 illustre la mise en place des pièces - une pale 3 et son couvercle 4 - dans un support 5 en matériau réfractaire, avant de procéder au brasage. La pale et le couvercle sont globalement, en vue supérieure, de forme trapézoïdale. La pale 3 présente deux faces principales, une face intrados concave 32 et une face extrados convexe (non visible sur la figure) avec un bord d'attaque Ba et un bord de fuite Bf qui délimitent ces faces. Le couvercle 4 se présente sous forme d'une paroi plate.

Sur les bases du trapèze, la pale est équipée respectivement d'une tête 34 et d'un pied 36 dans lequel un bouchon 37 est emmanché. La face intrados 32 de la pale 3 comporte une série de canaux ouverts 38, ou évents, disposés parallèlement pour déboucher à proximité du bord de fuite Bf de la pale 3.

Le support 5 présente une face supérieure 5a qui épouse la face extrados de la pale de sorte que la pale soit bien calée. La face intrados 32 de la pale accueille un cordon de brasure 6 (en lignes pointillés) sous la forme initiale d'un feuillard déposé sur le plan de joint C, à l'intérieur immédiat du contour du couvercle 4 du plan de joint de cette face 32. Le couvercle 4 est posé également sur le plan de joint de la face 32 via le cordon de brasure. Dans l'exemple, la brasure est un alliage à base d'argent à 50%, et les pièces à braser sont en alliage de cuivre - cobalt - béryllium.

L'inducteur 11 se présente sous la forme d'un circuit de conformation adaptée globalement à la conformation du plan de joint d'un couvercle et d'une pale, comme illustré par la vue supérieure de la figure 3 et la vue en perspective de la figure 4. Ce circuit 11 est composé de tronçons 11a de tubes de cuivre de section carrée, de côté inférieure mais proche de 1cm. Les tronçons sont linéaires et raccordés par soudage de sorte à se conformer globalement au contour de la pièce à braser 3 disposée sur le support 5. Sur la figure 3, apparaissent également la trace des doigts de contact 18 et du point représentatif 7 de visée pyrométrique à proximité du plan de joint.

L'inducteur 11 possède ainsi une conformation globale adaptée permettant de se rapprocher au plus près, sans contact, des zones longitudinales de brasure. Ainsi, l'inducteur se compose ici de quatre tronçons principaux, T1 à T4, globalement dans un même plan horizontal H1 parallèle à XOY. De manière général, une telle conformation et géométrie de l'inducteur permettent de sa rapprocher des pièces à braser avec un entrefer inférieur à 2 mm, alors que l'art antérieur prévoit de conserver une distance d'environ 2 cm. L'entrefer peut varier en fonction de différents paramètres : composition et quantité de brasure, cycle de chauffe, géométrie des pièces, de l'intensité du courant induit, etc.

Les tronçons T1 à T4 forment en vue supérieure un « U » et sont connectées en extrémité au transformateur (non représenté). L'intensité du courant et la tension alternative délivrée par le transformateur sont adaptés aux dimensions et à la nature des pièces à braser et de la brasure, afin de créer un champ magnétique et donc un courant induit d'intensités appropriées aux matériaux. Des concentreurs de champ en ferrite 8 sont avantageusement disposés dans les tronçons, et plus précisément au niveau des raccordements A de ces tronçons pour limiter les zones de fuite et concentrer le courant induit dans les zones de brasure.

Comme illustré par la figure 4, des ressorts 19 maintiennent en extension les doigts de contact 18 guidés par l'embout 16. Par ailleurs, l'embout 16 est traversé par une lumière 80 permettant le passage du rayon laser du pyromètre infrarouge (non représentée).

L'outillage décrit ci-dessus peut être mis en oeuvre selon le bloc diagramme illustré en figure 5 qui reprend les principaux équipements décrits en référence à la figure 1 : le générateur de puissance 40, le transformateur 60 et l'inducteur 11 couplés ensemble ; le pyromètre 12 de mesure du rayonnement R, le régulateur 50 relié au générateur 40, et l'unité de traitement de données 70 pour archivage couplé au terminal de visualisation 72 en temps réel des cycles thermiques.

Les paramètres du brasage - dimensions et géométrie de l'inducteur 11, état de surface des pièces 3 et 4 (dégraissage, décapage, ...), dépose de brasure 6 sur le plan de joint sous forme de feuillards, dépose du couvercle sur la pale, entrefer entre les équipements et les pièces à braser, contrainte exercée par l'embout de pression sur les pièces - sont figés avant la mise en route du cycle thermique. Dans l'exemple, l'entrefer est sensiblement égal à 1 mm et la pression est fixée à 0,02 N par doigt, soit 0,12 N pour l'ensemble des doigts.

Le générateur 60, de puissance ici égale à 6 kW, fournit une tension U1, qui est transformée en une tension alternative par le transformateur 60. Ce transformateur applique la tension u1 aux bornes de l'inducteur 11. Le courant induit dégage alors par effet Joule une température suffisante dans le cordon de brasage 6 entre les pièces 3 et 4 à braser pour liquéfier la brasure entre ces pièces et provoquer le brasage.

L'homogénéité de la température du joint brasé formé est avantageusement suivie par la caméra infrarouge 13, qui transmet une image de la zone des pièces à braser à l'unité de traitement 70. Le suivi d'homogénéité de la chauffe est avantageusement réalisé par comparaison entre l'image transmise par la caméra au cours de la chauffe et une cartographie thermique établie antérieurement. Des cartographies peuvent être établies et préenregistrées pour différents cycles thermiques et différents matériaux à braser également préenregistrés dans l'unité de traitement.

Le contrôle de la régulation thermique est effectué à partir des mesures de température effectuées par le pyromètre 12 et transmises au régulateur 50. Un point représentatif de la chauffe, situé dans le plan de joint à proximité du joint, est choisi comme point de visée du pyromètre 7 (figure 3) grâce à la cartographie établie au préalable par la camera IR.

Les valeurs de température mesurées par le pyromètre et la caméra infrarouge sont corrigées pendant la phase de mise au point, avec la simulation à un corps noir, afin de s'affranchir de la variation du coefficient d'émissivité du rayonnement avec la température. Pour ce faire, l'assemblage est recouvert d'une peinture ayant un coefficient d'émissivité proche de « 1 » pour simuler un corps noir. Les réglages d'une chauffe reproductible sont alors définis. Puis, avec comme valeur de départ les abaques des coefficients d'émissivité des principaux alliages, le coefficient exact est réglé de manière à reproduire le cycle précédemment obtenu.

Le cycle thermique à appliquer est paramétré dans le régulateur 50 : durées de la montée en température, du palier et du refroidissement, températures aux bornes de ces durées. Avantageusement, le cycle peut être choisi parmi des cycles préenregistrés. A chaque mesure de température par le pyromètre, l'écart entre la valeur mesurée - corrigée par le facteur d'émissivité - et la valeur attendue à l'instant du cycle est estimé par le régulateur 50. Une consigne de régulation de puissance, apte à réduire cet écart à zéro, est élaborée par le régulateur et transmise au générateur 40 qui règle sa puissance sur le signal de consigne ainsi transmis.

Dans l'exemple, la durée totale du cycle n'excède pas 5 min, avec une montée en température de 1 min, un palier de 1 min et un refroidissement de 3 min. La température du palier est stabilisée dans l'intervalle 680-720 °C avec la brasure à base d'argent. Le refroidissement est libre jusqu'à environ 300°C car un refroidissement forcé pourrait conduire à une « trempe » du matériau.

L'invention n'est pas limitée aux exemples décrits et représentés. Il est par exemple possible de prévoir une automatisation du brasage en utilisant une commande numérique, pouvant être interrompue manuellement ou par un automate à tout moment, à partir de l'unité de traitement des données. Après l'entrée de tous les paramètres figés qui resteront figés pendant l'opération et la saisie des données relatives aux matériaux de la brasure utilisée et des pièces à braser, la boucle de régulation du cycle thermique choisi est lancée par la commande et contrôlée par l'unité de traitement. Le suivi cartographique permet de vérifier la robustesse du procédé. La conformité au modèle préalablement enregistré est vérifiée et une alarme visuelle ou sonore peut être déclenchée en cas de dépassement d'écart de température au-delà d'un seuil prédéterminé.

De plus, de nombreuses opérations de brasage peuvent être pilotées par le procédé et l'outillage selon l'invention, en particulier les brasages qui ne nécessitent pas d'atmosphère contrôlée. En outre, le brasage de pièces peut avoir lieu dans une gamme de températures importantes, par exemple entre 500 et 800°C.

## Revendications

1. Procédé de brasage par induction de pièces (3, 4) pouvant présenter une forme complexe, comprenant les étapes consistant à déposer un cordon de brasure sur un plan de joint (C) entre les pièces (3, 4) à braser, à exercer une pression sensiblement uniforme sur les pièces à braser, et à localiser la chauffe par une induction de forme (11) au plus près du plan de joint des pièces à braser (4) sur lequel le cordon de brasure a été déposé, **caractérisé en ce qu'**il comporte les étapes consistant à définir un cycle thermique de chauffe comportant des phases de montée en température, de palier et de refroidissement en fonction du matériau à braser (6), à disposer d'une cartographie thermique du matériau à braser tenant compte des variations du coefficient d'émissivité de ce matériau pendant le cycle pour un contrôle d'homogénéisation de la chauffe, puis à réguler ce cycle thermique par une boucle d'asservissement fermée à partir d'une visée en un point représentatif (7) de chauffe tenant compte également des variations du coefficient d'émissivité du matériau en ce point et par ladite localisation de la chauffe.

2. Procédé de brasage par induction selon la revendication 1, dans lequel la prise en compte du coefficient d'émissivité du matériau à braser avec la température est effectuée par étalonnage de la variation du coefficient d'émissivité en fonction de la température de ce matériau par rapport à un corps noir à partir des flux de rayonnements respectifs obtenus aux mêmes températures.

3. Procédé de brasage par induction selon l'une des revendications 1 ou 2, dans lequel l'induction de chauffe est localisée à proximité de zones de brasure qui s'étendent selon des portions longitudinales du plan de joint (C).

4. Procédé de brasage par induction selon l'une quelconque des revendications précédentes, dans lequel le point représentatif de chauffe (7) est sélectionné à proximité du plan de joint (C).

5. Procédé de brasage par induction selon l'une quelconque des revendications précédentes, dans lequel le brasage est défini par des paramètres figés de géométrie et de positionnement relatif des pièces à braser et de l'induction de forme, ainsi que de l'état de surface des pièces à braser.

6. Poste de brasage de mise en oeuvre du procédé selon l'une quelconque des revendications précédentes, comportant un générateur de puissance électrique (40), apte à délivrer une tension déterminée (U1) à un transformateur (60) sur lequel est branché un circuit conducteur formant un inducteur de forme (11), ce circuit possédant une conformation globale qui se rapporte à celle de zones longitudinales de brasure définies par un contour (C) de pièce à braser disposée sur un support (5), des moyens de pression (16 à 18) aptes à exercer une contrainte déterminée et sensiblement constante sur les pièces à braser (3, 4), **caractérisé en ce qu'**un pyromètre infrarouge à visée laser (12) mesure la température du brasage, et **en ce qu'**un régulateur (50) est apte à délivrer une consigne de régulation de puissance au générateur (40) en fonction de la température mesurée et d'une cartographie thermique du matériau à braser pré-enregistrée dans une unité de traitement (70), ladite cartographie tenant compte des variations du coefficient d'émissivité de ce matériau pendant le cycle pour un contrôle d'homogénéisation de la chauffe.

7. Poste de brasage selon la revendication précédente, dans lequel la cartographie thermique est mesurée par une caméra infrarouge (13) en phase de mise au point des paramètres de brasage, avant lancement de la fabrication série pour figer des paramètres de brasage.

8. Poste de brasage selon l'une des revendications 6 ou 7, dans lequel l'inducteur (11) est constitué par une structure métallique à section rectangulaire, formée de tronçons linéaires (T1 à T4) articulés par soudage et épousant globalement la forme du plan de joint des pièces à braser (3,4).

9. Poste de brasage selon la revendication précédente, dans lequel la structure métallique de l'inducteur (11) est de section carrée de côté inférieure à 1 cm.

10. Poste de brasage selon l'une des revendications 8 ou 9, dans lequel des concentreurs de champ (8) sont disposés au niveau des raccordements angulaires (A) de l'inducteur (11).

11. Poste de brasage selon l'une quelconque des revendications 6 à 10, dans lequel les moyens de pression sont composés d'un embout de serrage (16) pourvu de doigts isolants (18) munis de ressorts (19) qui viennent en pression contre une face de l'une des pièces (4) à braser, de sorte à exercer une contrainte déterminée et sensible constante sur l'ensemble des deux pièces (3,4)

12. Poste de brasage selon l'une quelconque des revendications 6 à 11, dans lequel des buses d'air comprimé (15a, 15b) sont disposées à proximité des pièces à braser (3, 4) pour accélérer le refroidissement.

13. Poste de brasage multiple comportant plusieurs inducteurs d'un poste selon l'une quelconque des revendications 6 à 12, **caractérisé en ce qu'**il est apte à braser simultanément plusieurs joints d'une même pièce.

14. Poste de brasage multiple selon la revendication précédente, dans lequel un générateur, un transformateur et un régulateur sont mis en commun à tous les outillages.

## Patentansprüche

1. Verfahren zum Induktionslöten von Teilen (3, 4), die eine komplexe Form aufweisen können, das die Schritte umfasst, die darin bestehen, ein Lötmittelband auf einer Verbindungsebene (C) zwischen den zu verlötenden Teilen (3, 4) aufzubringen, um einen im Wesentlichen gleichmäßigen Druck auf die zu verlötenden Teile auszuüben, und das Heizen durch eine Forminduktion (11) unmittelbar bei einer Verbindungsebene der zu verlötenden Teile (4) zu lokalisieren, auf die das Lötmittelband aufgebracht ist, **dadurch gekennzeichnet, dass** es die Schritte umfasst, die darin bestehen, einen thermischen Heizzyklus zu definieren, der Phasen des Temperaturanstiegs, des Plateaus und der Abkühlung als Funktion des zu verlötenden Materials (6) umfasst, eine thermische Kartographie des zu verlötenden Materials vorzusehen, die Variationen des Emissionskoeffizienten dieses Materials während des Zyklus für eine Kontrolle der Homogenisation des Heizens berücksichtigt, hierauf den thermischen Zyklus durch einen geschlossenen Regelkreis von einem Visieren auf einen Punkt (7) an, der repräsentativ für das Heizen gleichfalls unter Berücksichtigung der Variationen des Emissionskoeffizients des Materials bei diesem Punkt ist, und durch die Lokalisation des Heizens zu regeln.

2. Verfahren zum Induktionslöten nach Anspruch 1, wobei die Berücksichtigung des Emissionskoeffizienten des zu verlötenden Materials mit der Temperatur durch eine Kalibrierung der Variation des Emissionskoeffizienten als Funktion der Temperatur des Materials mit Bezug auf einen schwarzen Körper ausgehend von den Flüssen der entsprechenden Strahlungen bewirkt wird, die bei den gleichen Temperaturen erhalten werden.

3. Verfahren zum Induktionslöten nach einem der Ansprüche 1 oder 2, wobei die Heizinduktion in der Nähe von Bereichen des Lötmittels lokalisiert ist, die sich entlang von Längsabschnitten der Verbindungsebene (C) erstrecken.

4. Verfahren zum Induktionslöten nach einem der vorhergehenden Ansprüche, wobei der Punkt, der repräsentativ für das Heizen (7) ist, in der Nähe der Verbindungsebene (C) ausgewählt ist.

5. Verfahren zum Induktionslöten nach einem der vorhergehenden Ansprüche, wobei das Löten durch Parameter definiert ist, die eine feste Geometrie und Positionierung relativ zu den zu lötenden Teilen und der Forminduktion sowie dem Zustand der Oberfläche der zu verlötenden Teile aufweisen.

6. Lötstation zum Umsetzen des Verfahrens nach einem der vorhergehenden Ansprüche, die einen elektrischen Leistungsgenerator (40) umfasst, der eingerichtet ist, eine bestimmte Spannung (U1) an einen Transformator (60) zu liefern, an dem eine leitfähige Schaltung angeschlossen ist, die einen Forminduktor (11) bildet, wobei die Schaltung eine allgemeine Gestaltung aufweist, die sich auf diejenige der Längsbereiche des Lötmittels bezieht, die durch eine Kontor (C) des zu verlötenden Teils definiert sind, das auf einem Träger (5) angeordnet ist, wobei Druckmittel (16 bis 18) eingerichtet sind, eine bestimmte und im Wesentlichen konstante Spannung auf die zu verlötenden Teile (3, 4) auszuüben, **dadurch gekennzeichnet, dass** ein Infrarot-Pyrometer mit Laservisier (12) die Löttemperatur misst, und dass ein Regler (50) eingerichtet ist, einen Sollwert der Regelleistung am dem Generator (40) als Funktion der gemessenen Temperatur und einer thermischen Kartographie des zu verlötenden Materials, die in einer Verarbeitungseinheit (70) vorgespeichert ist, zu liefern, wobei die thermische Kartographie Variationen des Emissionskoeffizients von diesem Material während dem Zyklus für eine Kontrolle der Homogenisation des Heizens berücksichtigt.

7. Lötstation nach dem vorhergehenden Anspruch, wobei die thermische Kartographie durch eine Infrarotkamera (13) während der Phase des Einsatzes der Lötparameter vor dem Start der Serienherstellung gemessen wird, um Lötparameter festzulegen.

8. Lötstation nach einem der Ansprüche 6 oder 7, wobei der Induktor (11) durch eine Metallstruktur mit einem rechteckigen Querschnitt gebildet ist, die aus linearen Abschnitten (T1 bis T4) gebildet ist, die durch Schweißen angelenkt sind und im Wesentlichen an die Form der Verbindungsebene der zu verlötenden Teile (3,4) angepasst sind.

9. Lötstation nach dem vorhergehenden Anspruch, wobei die Metallstruktur des Induktors (11) einen quadratischen Querschnitt mit einer Seite hat, die kleiner als 1 cm ist.

10. Lötstation nach einem der Ansprüche 8 oder 9, wobei Feldkonzentratoren (8) bei Eckverbindungen (A) des Induktors (11) angeordnet sind.

11. Lötstation nach einem der Ansprüche 6 bis 10, wobei die Druckmittel aus einem Klemmteil (16) zusammengesetzt sind, das mit isolierenden Fingern (18) versehen ist, die mit Federn (19) ausgestattet sind, die gegen eine Fläche eines der zu verlötenden Teile (4) gedrückt werden, so dass eine vorbestimmte und im Wesentlichen konstante Spannung auf die Anordnung der zwei Teile (3,4) ausgeübt wird.

12. Lötstation nach einem der Ansprüche 6 bis 11, wobei Druckluftdüsen (15a, 15b) in der Nähe der zu verlötenden Teile (3, 4) angeordnet sind, um das Abkühlen zu beschleunigen.

13. Mehrfache Lötstation, die mehrere Induktoren einer Station umfasst, nach einem der Ansprüche 6 bis 12, **dadurch gekennzeichnet, dass** sie geeignet ist, gleichzeitig mehrere Verbindungen eines gleichen Teils zu verlöten.

14. Mehrfache Lötstation nach dem vorhergehenden Anspruch, wobei ein Generator, ein Transformator und ein Regler für alle Werkzeuge gemeinsam genutzt werden.

## Claims

1. An induction brazing method for parts (3, 4) being able to have a complex shape, comprising the steps of depositing a brazing seam on a joint plan (C) between the parts (3, 4) to be brazed, exerting a substantially uniform pressure onto the parts to be brazed, and locating heat through a shape induction (11) the closest to the joint plan of the parts to be brazed (4), on which the brazing seam has been deposited, **characterized in that** it comprises the steps of defining a heating heat cycle comprising phases of temperature rise, leveling and cooling depending on the material to be brazed (6), making available a heat mapping of the material to be brazed taking the variations of the emissivity coefficient for such material into account during the cycle for a heating homogenization check, then regulating such heat cycle by a closed servo loop from a sight in one point (7) being heat representative by also taking variations of the emissivity coefficient of the material in such point into account and by said locating of said heat.

2. The induction brazing method according to claim 1, wherein taking the emissivity coefficient for the material to be brazed into account with temperature is performed by calibrating the variation of the emissivity coefficient depending on the temperature of such material with respect to a black body from the respective radiating flows obtained at the same temperatures.

3. The induction brazing method according to any of claims 1 or 2, wherein the heat induction is localized near the brazing areas extending according to longitudinal portions of the joint plan (C).

4. The induction brazing method according to any of preceding claims, wherein the heat representative point (7) is selected near the joint plan (C).

5. The induction brazing method according to any of preceding claims, wherein brazing is defined by fixed parameters in terms of geometry and relative positioning of the parts to be brazed and the shape induction, as well as the surface condition of the parts to be brazed.

6. A brazing station for the implementation of the method according to any of preceding claims, comprising a power generator (40) capable to supply a predetermined voltage (U1) to a transformer (60) connected to a circuit forming a shape inductor (11), said circuit having an overall shape adapted to be related to the longitudinal areas being brazed defined by a contour (C) of the part to be brazed located on a support (5), pressure means (16 to 18) adapted to exert a determined and substantially constant constraint on the parts to be brazed (3, 4), **characterized in that** a laser-sighted infrared pyrometer (12) measures the brazing temperature, and **in that** a controller (50) is adapted to supply a power regulation set-point to the generator (40) depending on the temperature being measured and a pre-registered heat mapping of the material to be brazed in a processing unit (70), said mapping taking the variations of the emissivity coefficient for such material into account during the cycle for a heating homogenization check.

7. The brazing station according to the preceding claim, wherein the heat mapping is measured by an infrared camera (13) upon an adjustment phase of the brazing parameters, before launching the serial manufacture, to fix such brazing parameters.

8. The brazing station according to any of claims 6 or 7, wherein the inductor (11) consists in a metallic structure with a rectangular section, preferably a square one formed with linear lengths (T1 to T4) hinge connected by welding and taking globally the shape of the joint plan of the parts to be brazed (3, 4).

9. The brazing station according to the preceding claim, wherein the metallic structure of the inductor (11) has a square section with a side smaller than 1 cm.

10. The brazing station according to any of claims 8 or 9, wherein field concentrators (8) are located at the level of the angular connections (A) of the inductor (11).

11. The brazing station according to any of claims 6 to 10, wherein the pressure means are made of a clamping tip (16) provided with insulating fingers (18) equipped with springs (19) exerting a pressure against one side of one of the parts (4) to be brazed so as to apply a determined and substantially constant constraint over the whole two parts (3, 4).

12. The brazing station according to any of claims 6 to 11, wherein compressed air nozzles (15a, 15b) are located close to the parts to be brazed (3, 4) so as to accelerate cooling.

13. A multiple brazing station comprising several inductors of one station according to any of claims 6 to 12, **characterized in that** it is able to simultaneously braze various joints of one single part.

14. The multiple brazing station according to the preceding claim, wherein a generator, a transformer and a controller are use in common for all tools.
